# EUROPEAN PATENT APPLICATION

(11) **EP 4 745 914 A1**
(43) Date of publication of application: **20.05.2026**
(21) Application number: 24853140.2
(22) Date of filing: 19.02.2024
(51) Int. Cl.: G06V 10/774

(54) **POINT CLOUD DATA PROCESSING METHOD AND RELATED APPARATUS**

(30) Priority: 11.08.2023 CN 202311013369; 12.01.2024 CN 202410050548
(71) Applicant: Huawei Cloud Computing Technologies Co., Ltd., Gui'an New District, Guizhou 550025 (CN)
(72) Inventor: SUN, Dong, Shenzhen, Guangdong 518129 (CN); ZHAO, Hanlin, Shenzhen, Guangdong 518129 (CN); DING, Lian, Shenzhen, Guangdong 518129 (CN)
(74) Representative: Goddar, Heinz J.
(86) International application number: PCT/CN2024/077558
(87) International publication number: WO 2025/035723

(57) **Abstract**

This application discloses a point cloud data processing method and apparatus, and a related device, relating to the field of computer vision. The method includes: obtaining an original point cloud data set of a scene, where the scene includes a target object; augmenting point cloud data of a target object, to generate an augmented point cloud data set; training a first model by using the augmented point cloud data set, to obtain a trained first model, where the trained first model is configured to execute a point cloud data processing task; training a second model by using the at least one original point cloud data set and the trained first model; and obtaining a trained second model, where the trained second model is configured to execute the point cloud data processing task. In other words, an original point cloud is augmented to obtain a dense point cloud, the dense point cloud and the original point cloud are separately used for training to obtain a model, and inter-model training is performed, allowing a target model to have a capability of extracting high-quality information from sparse point clouds and executing point cloud processing tasks, thereby improving a point cloud data processing effect.

## Description

### TECHNICAL FIELD

This application relates to the field of computer vision, and in particular, to a point cloud data processing method and apparatus, a computing device, and a storage medium.

### BACKGROUND

Point cloud data is a set of vectors in three-dimensional coordinates, and includes rich information such as three-dimensional coordinates, colors, and classification values. The point cloud data may be used for various computer vision-type downstream tasks, such as object segmentation and object detection.

The point cloud data is typically collected and generated by lidars or cameras. The point cloud data collected by the lidars is sparse due to factors such as distance, blocking, and illumination. The point cloud data collected by the cameras needs to be generated by using depth estimation algorithms, whose results are unstable and often exhibit deformation, sparseness, and gaps. Sparse or hollow point clouds affect the accuracy of object segmentation, object detection, and other tasks

In related technologies, point cloud data is augmented to enrich point cloud information, and augmented point clouds are used to train models. However, this method does not resolve the fundamental problem that task execution is affected by the sparse point cloud data, the point cloud data augmentation approach has insufficiency, model training efficiency is low, and an execution effect of a point cloud data processing task is poor.

### SUMMARY

This application provides a point cloud data processing method and apparatus, a computing device, and a storage medium, to augment sparse original point cloud data, train a model by using augmented point cloud data, and then train a task model, thereby enhancing sensing performance of the task model on the sparse point cloud data, and expanding a point cloud data augmentation manner. The technical solutions are as follows.

According to a first aspect, a point cloud data processing method is provided. The method includes: obtaining at least one original point cloud data set of a scene, where the scene includes a target object; augmenting point cloud data of the target object included in the at least one original point cloud data set, to generate at least one augmented point cloud data set corresponding to the at least one original point cloud data set; training a first neural network model by using the at least one augmented point cloud data set, to obtain a trained first neural network model, where the trained first neural network model is configured to execute a point cloud data processing task; training a second neural network model by using the at least one original point cloud data set and the trained first neural network model; and obtaining a trained second neural network model, where the trained second neural network model is configured to execute the point cloud data processing task.

In embodiments of this application, an original data set is augmented to obtain a dense point cloud with better quality, the dense point cloud is used for training to obtain a first neural network that can execute a point cloud processing task. The first neural network and a sparse point cloud are used for training a second neural network, so that a learning capability of the second neural network is close to that of the first neural network, and the second neural network has a capability of extracting high-quality information from the sparse point cloud and executing the point cloud processing task. Then, the trained first neural network can more efficiently execute the point cloud processing task by directly using the sparse original point cloud. For example, the point cloud processing task may be a point cloud data processing task such as object segmentation, object detection, object classification, and point cloud denoising.

Optionally, training the second neural network model by using the at least one original point cloud data set and the trained first neural network model includes: pre-training the second neural network model by using the at least one original point cloud data set, to obtain a pre-trained second neural network model, and training the pre-trained second neural network model by using the trained first neural network model; or training the second neural network model by using both the at least one original point cloud data set and the trained first neural network model.

In other words, in embodiments of this application, the original point cloud data set may be first used to be input to the second neural network model for pre-training, and then the first neural network model is used to train the pre-trained second neural network model. In this case, the model pre-training performed by using the original point cloud and the second neural network training performed by using the first neural network occur in sequence. Alternatively, the second neural network model may be trained by using both the original point cloud data set and the first neural network model. In this case, a supervised loss of consistency training performed on the second neural network by using the first neural network and a supervised loss of a target task in which the second neural network uses the original point cloud data as an input are simultaneously transmitted to the second neural network for training. Specifically, in a process of performing consistency training on the second neural network model by using the first neural network model, the first neural network is a teacher network, and the second neural network is a student network.

In other words, in the two cases, the finally obtained trained second neural network model is trained by using both the original point cloud data set and the first neural network model. Therefore, when the original low-quality point cloud data is used as the input, the second neural network learns a capability close to that of extracting high-quality information by the second neural network model to execute a target point cloud processing task.

Optionally, augmenting the point cloud data of the target object included in the at least one original point cloud data set includes: determining, from the point cloud data of the target object included in the at least one original point cloud data set, first point cloud data whose density is less than a sparsity threshold, to perform densification on the first point cloud data, where the at least one augmented point cloud data set includes densified first point cloud data.

In other words, a point cloud data augmentation manner is expanded. The point cloud data of the target object of relatively low density in the original point cloud data set is densified, to obtain the augmented point cloud data set, thereby improving a density degree of a target object point cloud, improving quality of the augmented point cloud data set, and facilitating training of the second neural network model by using the augmented point cloud data set.

Optionally, augmenting the point cloud data of the target object included in the at least one original point cloud data set includes: determining, for replication from the point cloud data of the target object included in the at least one original point cloud data set, second point cloud data whose density is higher than a density threshold, where the at least one augmented point cloud data set includes the replicated second point cloud data.

In other words, a point cloud data augmentation manner is expanded. The point cloud data of the target object of relatively high density in the original point cloud data set is replicated, to obtain the augmented point cloud data set. The data of relatively high density is point cloud data whose quality is relatively high in the original point cloud data set. The data is replicated, so that an amount of high-quality target object point cloud data in the augmented point cloud data set is increased, thereby improving the quality of the augmented point cloud data set, and facilitating training of the second neural network model by using the augmented point cloud data set.

Optionally, before training the second neural network model by using the at least one original point cloud data set and the trained first neural network model, the method further includes: replicating the second target point cloud data included in an original point cloud data set; and adding replicated second target point cloud data of the second target point cloud data included in the original point cloud data set to the original point cloud data set.

In other words, if an augmentation manner of replicating the high-density target object point cloud data is used, these high-density target object point clouds that have undergone a same replicating operation also need to be added to the original point cloud data set used for training the second neural network model, to ensure same distribution of target objects in data sets used for training the neural network, so as to improve effectiveness and accuracy of subsequent consistency training performed on the second neural network model by using the first neural network model.

Optionally, training the first neural network model by using the at least one augmented point cloud data set, to obtain the trained first neural network model includes: training the first neural network model by using an augmented point cloud data set corresponding to an original point cloud data set, to obtain the trained first neural network model, and obtain a first task processing result of the original point cloud data set. Training the second neural network model by using the at least one original point cloud data set and the trained first neural network model includes: training the second neural network model by using the original point cloud data set and the trained first neural network model, to obtain a second task processing result of the original point cloud data set. The method further includes: generating a visualization interface, where the visualization interface is configured to display the first task processing result and the second task processing result of the original point cloud data set in pairs in the form of images or data; and receiving a hard example data set confirmation instruction, where the hard example data set confirmation instruction indicates that the original point cloud data set corresponding to the first task processing result or the second task processing result is a hard example data set.

In other words, in this embodiment provided in this application, the task processing results of the first neural network model and the second neural network model are displayed to a user through visualization interface. Specifically, the visualization interface displays, in pairs, an original point cloud data set and a processing result of an augmented point cloud data set corresponding to the original point cloud data set under each of the second neural network model and the first neural network model for the user, to intuitively display capabilities of processing the data by the two networks. Optionally, if the two results differ greatly, it means that the second neural network has a poor capability of processing the point cloud data set, and the point cloud data set may be a hard example data set. In this case, a determining instruction like tap/click selection by the user is received, and the data set corresponding to the processing result is determined as the hard example data set. Specifically, the task processing result may be a processing result of an intermediate process, for example, a feature extraction result, or may be a processing result at the end of the process, for example, a mask for object segmentation or an object recognition probability. This processing result is not limited in this application.

Optionally, the method further includes: augmenting the hard example data set, to generate at least one augmented hard example data set; and adding the at least one augmented hard example data set to the at least one original point cloud data set. In other words, after the hard example data set is determined, the hard example data set is augmented and added to the original data set, so that the neural network is trained based on more hard example data sets, thereby expanding an augmentation manner of the hard example data set, and improving a capability of the neural network in processing the hard example data.

Optionally, the scene further includes a background object. Augmenting the hard example data set, to generate the at least one augmented hard example data set includes: extracting point cloud data of a target object from the hard example data set; and combining the point cloud data of the target object in the hard example data set and point cloud data of the background object in the at least one original point cloud data set, to generate the at least one augmented hard example data set.

In other words, embodiments of this application provide a manner of augmenting the hard example data set. In some cases, a data set becomes a hard example data set because point cloud data of a target object is special. In this case, the point cloud data of the target object in the hard example data set is extracted, and is combined with point cloud data of a background object in non-hard example data, to generate more point cloud data sets with special point cloud data of the target object to be used as an augmented hard example data set, thereby expanding a manner of augmenting the hard example data set.

According to a third aspect, a point cloud data processing apparatus is provided. The point cloud data processing apparatus has a function of implementing the activity of the point cloud data processing method in the first aspect. The point cloud data processing apparatus includes at least one module, and the at least one module is configured to implement the point cloud data processing method according to the first aspect.

According to a fourth aspect, a computing device cluster is provided, and the computing device cluster includes at least one computing device. Each computing device includes a processor and a memory. The processor of the at least one computing device is configured to execute instructions stored in the memory of the at least one computing device, to cause the computing device cluster to perform the point cloud data processing method according to the first aspect.

Optionally, each computing device may further include a communication bus, and the communication bus is configured to establish a connection between the processor and the memory.

Optionally, each computing device may further include a communication interface, and the communication interface is configured to implement communication between the computing device and another device or a communication network.

According to a fifth aspect, a computer-readable storage medium is provided. The storage medium stores instructions, and when the instructions run on a computing device, the computing device is caused to perform the point cloud data processing method according to the first aspect.

According to a sixth aspect, a computer program product including instructions is provided. When the instructions run on a computing device, the computing device is caused to perform the point cloud data processing method according to the first aspect. In other words, a computer program is provided. When the computer program runs on a computing device, the computing device is caused to perform the point cloud data processing method according to the first aspect.

Technical effects obtained in the second aspect to the sixth aspect are similar to technical effects obtained by using corresponding technical means in the first aspect. Details are not described herein again.

### BRIEF DESCRIPTION OF DRAWINGS

To describe technical solutions in embodiments of the present invention more clearly, the following briefly introduces accompanying drawings used in describing embodiments. It is clear that the accompanying drawings in the following descriptions show some embodiments of the present invention, and a person of ordinary skill in the art may still derive other drawings from these accompanying drawings without creative efforts.
FIG. 1 is a diagram of a structure of a point cloud data processing system according to an embodiment of this application;
FIG. 2 is a schematic flowchart of a point cloud data processing method according to an embodiment of this application;
FIG. 3 is a diagram of a point cloud data processing interaction interface according to an embodiment of this application;
FIG. 4 is a diagram of another point cloud data processing interaction interface according to an embodiment of this application;
FIG. 5a to FIG. 5d are diagrams of point cloud data augmentation effects according to an embodiment of this application;
FIG. 6a to FIG. 6d are diagrams of training result comparison according to an embodiment of this application;
FIG. 7 is a diagram of another point cloud data processing interaction interface according to an embodiment of this application;
FIG. 8 is a schematic flowchart of another point cloud data processing method according to an embodiment of this application;
FIG. 9 is a diagram of a structure of a point cloud data processing apparatus according to an embodiment of this application;
FIG. 10 is a diagram of a structure of a computing device according to an embodiment of this application;
FIG. 11 is a diagram of a structure of a computing device cluster according to an embodiment of this application; and
FIG. 12 is a diagram of a network connection relationship of a computing device according to an embodiment of this application.

### DESCRIPTION OF EMBODIMENTS

The following clearly and completely describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

"Embodiments" mentioned herein mean that specific features, structures, or characteristics described in combination with embodiments may be included in at least one embodiment of this application. The term shown in various locations in the specification may not necessarily refer to a same embodiment, and is not an independent or alternative embodiment exclusive from another embodiment. It is explicitly and implicitly understood by a person skilled in the art that embodiments described in the specification may be combined with another embodiment.

Some terms and related technologies in this application are first described with reference to the accompanying drawings, to facilitate understanding by a person skilled in the art.

Deep learning (Deep Learning, DL) is a type of machine learning technology based on deep neural network algorithms, characterizing by processing and analyzing data using a structure with multiple nonlinear transformations. It is primarily applied to scenarios such as sensing and decision-making in the field of artificial intelligence, such as image and speech recognition, natural language translation, and computer games.

A point cloud (Point Cloud, PC) is a three-dimensional data representation. Each point in data represents attribute values such as a group of X, Y, and Z geometric coordinates, color, and strength. The strength value is for recoding strength of a returned signal based on object surface reflectivity. A combination of these points is referred to as a point cloud, representing a collection of data points of a 3D shape or an object in space. The three-dimensional point cloud may be obtained by using a lidar, an RGB-D camera, a three-dimensional scanner, or another device, or may be generated by using computer graphics methods.

Object detection (Object Detection, OD) is one of the core problems in the field of computer vision. A task of the object detection is to find all targets (objects) of interest in images and determine types and locations of the targets. Object detection algorithms are classified into two types: a region-based (Two Stage) method and a regression-based (One Stage) method. The region-based method is that some candidate regions that may include the target are first generated, and then each of the regions is classified and located. The regression-based method is that a category and a location of the target on the image are directly predicted, usually with faster speed but less accuracy.

Semantic segmentation (Semantic Segmentation, SS) is a typical computer vision task that involves using some raw data (for example, planar images) as an input and converting the data into a highlighted mask of a region of interest, with a purpose of assigning each pixel in the image to a semantic meaning category, such as a person, a car, or a cat. The semantic segmentation may help better understand content and a structure of the image.

A hard example (Hard Sample) is a complex sample that is hard to be accurately identified or located by a model. For example, in the object detection, hard examples are targets that are hard to be accurately located or identified, and losses of these samples are large, bringing challenges to model training. In object segmentation, hard examples are target regions that are hard to be accurately segmented since these samples may include blurred boundaries, blocking, or complex shapes.

Consistency training involves using a consistency loss function between a teacher model and a student model to train the student model. In the consistency training, outputs of the teacher model and student model are considered as two different perspectives, and the consistency loss function is used to ensure consistency between the two perspectives. A purpose of the consistency loss function is to make the output of the student model consistent with that of the teacher model as much as possible. Such an approach of consistency training enhances a generalization ability of the student model and calculation costs of the model. During training, a same batch of data is fed into the two models. A predicted output of the teacher model is used as a soft label, and a real label is used as a hard label. Two losses of the student model are calculated separately. Finally, the two losses are weighted and summed up as a final loss to update network parameters. Only the student model is used for prediction.

A gold standard means a real bounding box (Ground Truth Box) or a predicted bounding box (Predicted Box). The real bounding box is an actual target position marked in an image. For each target, a rectangular bounding box is manually or automatically marked to indicate the target position. The predicted bounding box is a bounding box generated by the model, and is used to represent a target that the model considers present in the image. The model generates these bounding boxes using detection algorithms, typically using a convolutional neural network (Convolutional Neural Network, CNN) or another deep learning model.

Before a point cloud data processing method provided in embodiments of the present invention is described, an application scenario of embodiments of the present invention is first described.

Point cloud data is a set of points in a three-dimensional coordinate system, and includes rich information. Point cloud data typically represents an object, a scene, or an environment in a real world. Each point in the point cloud data has a set of attributes, and these attributes may include three-dimensional coordinates, color information, strength values, classification values, timestamps, and the like.

There are a plurality of manners for obtaining the point cloud data, and lidars and cameras are the most commonly used. Currently, the lidar is a most commonly used sensing device in fields such as self-driving, unmanned vehicles, augmented reality, and robots. As a common depth measurement device, the lidar has an advantage of depth accuracy. However, due to common factors such as distance, blocking, and light reflection, point cloud data collected by the lidar is a group of sparse points in three-dimensional space. Density of these points is low, and a continuous surface cannot be formed, resulting in extremely incomplete corresponding shapes and structures. In addition, point clouds are sparser at greater distances, causing challenges to downstream tasks such as object detection and instance segmentation. Consequently, it is extremely difficult to perform precise autonomous obstacle avoidance and an autonomous operation based on the sparse point cloud of the lidar. The camera is also a common sensor for sensing. Visual signals collected by the camera are dense, with high resolution, rich information, and low costs. However, a pure vision-based sensing algorithm also has significant disadvantages. A result of depth estimation is unstable or even accompanied by numerous fragments and gaps, resulting in deformation, sparseness, and gaps of the three-dimensional point cloud, and further affecting the downstream tasks.

In some embodiments, the point cloud data may be used for a plurality of computer vision-type downstream tasks, such as semantic segmentation and object detection. In a more specific scenario, the point cloud data may be further used in a self-driving system to sense an ambient environment to improve security and efficiency, used in a three-dimensional reconstruction application such as AR or VR to generate a fine and complete three-dimensional model, so as to create a virtual scenario, or used in another scenario.

Typically, in related technologies, the point cloud data is augmented to enhance a sensing effect of a downstream task model. A complete process of using the point cloud data to execute a related task is as follows: In a model training phase, original point cloud data is first collected and generated by using a device like a lidar and a camera, then the original point cloud data is augmented to obtain augmented point cloud data, the augmented point cloud data is used to train the downstream task model, and finally, a trained downstream task model is used to perform inference and execute a target task. However, due to inherent properties of point cloud data such as rotational invariance and scale invariance, related technologies commonly encounter problems such as insufficient point cloud augmentation manners and a lack of diversity, resulting in low training efficiency, overfitting, and the like. In addition, a fundamental problem of a poor task execution effect caused by sparseness is not resolved in related technologies.

Based on this, embodiments of the present invention provide a point cloud data processing method. A neural network is separately trained by using original data and augmenting, and the neural network that uses the augmented data as data is used to train a neural network that uses sparse data as an input, making an output and a task processing capability of the latter neural network close to those of the former neural network, to obtain a trained neural network model. In this way, when the sparse original point cloud data is processed, the network model can output a better processing result, thereby improving an effect of executing a point cloud processing task.

It should be understood that the point cloud processing scenario in the foregoing example is intended to describe the technical solutions in embodiments of the present invention more clearly, and does not constitute any limitation on the technical solutions provided in embodiments of the present invention. A person of ordinary skill in the art may know that, with emergence of new point cloud data processing scenarios, the technical solutions provided in embodiments of the present invention are also applicable to a similar technical problem.

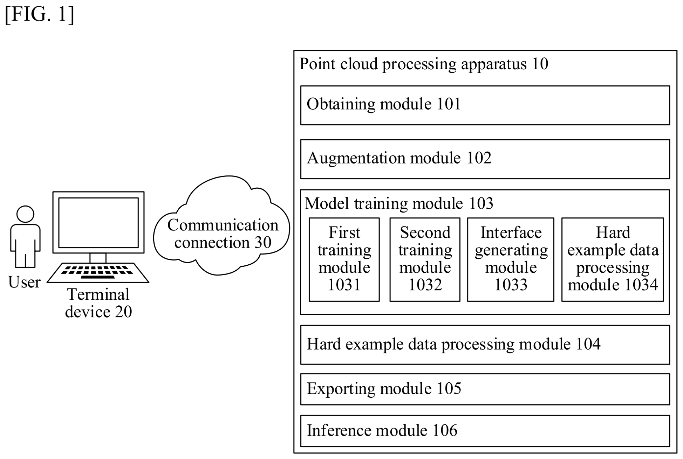

To describe composition of a point cloud processing apparatus in an embodiment of the present invention, refer to FIG. 1, which is a diagram of a structure of a point cloud data processing system according to an embodiment of the present invention. As shown in FIG. 1, the diagram shows a relationship between a point cloud processing apparatus 10 and another component in the system, and composition modules of the point cloud processing apparatus 10. The diagram includes the point cloud processing apparatus 10, a terminal device 20, and a communication connection 30. The point cloud processing apparatus 10 includes an obtaining module 101, an augmentation module 102, a model training module 103, a hard example data processing module 104, an exporting module 105, and an inference module 106. Specifically, the model training module 103 further includes a first training module 1031, a second training module 1032, an interface generating module 1033, and a hard example data processing module 1034. The terminal device 20 is connected to the point cloud processing apparatus 10 through the communication connection. A user may send an instruction to the point cloud processing apparatus 10 through the terminal device 20. Specifically, the point cloud processing apparatus 10 receives, through the communication connection 20, information or the instruction entered by the user on the terminal device 20. In an embodiment provided in the present invention, content that may be set by the user is obtained through an interface in the point cloud processing apparatus 10. The interface is, for example, an application programming interface (Application Programming Interface, API), an API-based configuration interface, or another interaction interface that may interact with a tenant. This is not limited in embodiments of the present invention. An interaction interface generated by the point cloud processing apparatus 10 may be displayed in the terminal device 20. A part or all of modules in the apparatus may be used in a computing instance, specifically, used in a computing instance like a data center, a server, a virtual machine, or a container. This is not limited in the present invention. Preferably, the obtaining module 101, the augmentation module 102, the model training module 103, the hard example data processing module 104, and the exporting module 105 may be deployed in at least one server, and the inference module 106 may be deployed in a server of another data center, or may be deployed on the terminal device. This is not limited in the present invention.

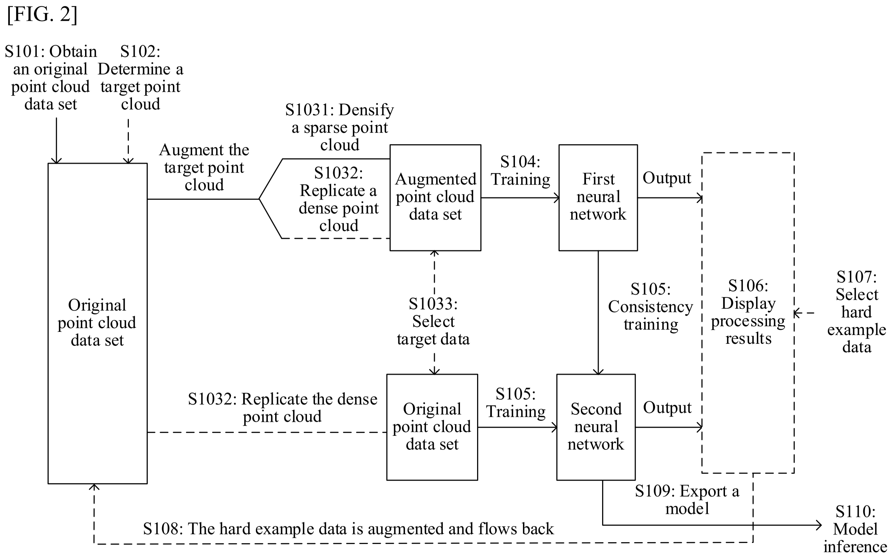

Based on the foregoing established point cloud data processing apparatus 10 and point cloud data processing system, an embodiment of the present invention further discloses a point cloud data processing method. FIG. 2 is a schematic flowchart of a point cloud data processing method according to an embodiment of the present invention. The method may be applied to a computing instance. Specifically, the method may be partially or completely applied to a computing instance like a data center, a server, a virtual machine, or a container. An application scenario of the point cloud data processing method is not limited in the present invention. The method includes but is not limited to the following steps.

S101: Obtain an original point cloud data set.

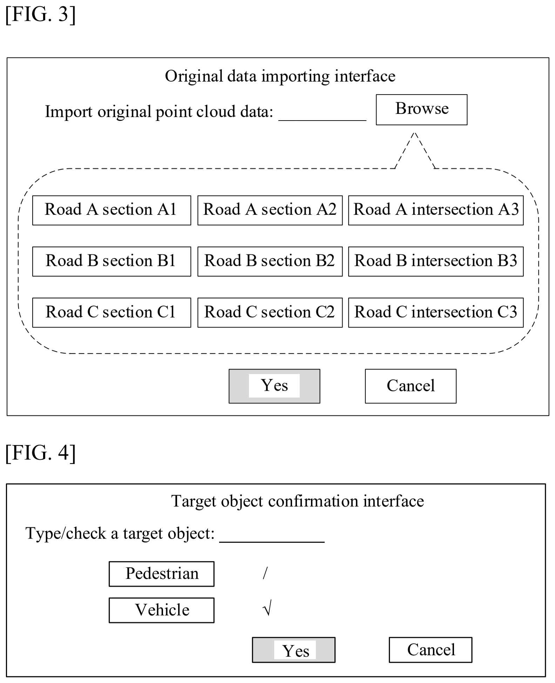

Specifically, the obtaining module 101 obtains at least one original point cloud data set. In an embodiment provided in the present invention, the point cloud processing apparatus 10 includes a point cloud database. The original point cloud data set may be pre-stored in an original point cloud database, or may be uploaded by a user to the point cloud processing apparatus online. For an embodiment of importing an original data point cloud by the user, refer to FIG. 3, which is a diagram of a point cloud data processing interaction interface according to an embodiment of the present invention. As shown in FIG. 3, the user imports the original point cloud data set on an original data importing interface. For example, when point cloud data is collected on a public road, a 3D point cloud collection device like a lidar or a depth camera may be mounted on a mobile device, and when the mobile device moves, one 3D point cloud data set is collected at intervals of a fixed time period. The 3D point cloud data set is a point cloud data set at the moment and the movement location. Specifically, a collection scenario may include a target object and a background object. Therefore, a 3D point cloud data set may include point cloud data of the target object and point cloud data of the background object. After the collection ends, a data packet including at least one 3D point cloud data set may be formed, and the data packet is a 3D point cloud data packet of this road section. The data packet includes point cloud data of a road A section A1, a road A section A2, ..., and a road C intersection C3 on the road in the region, and optionally, may also include data of a same place at different time.

In an embodiment provided in the present invention, the original point cloud data set obtained by the obtaining module 101 is a data set that has undergone labeling processing. For example, the labeling processing may be that an annotator box-selects a part or all of objects from the collected 3D point cloud data by using a labeling software, where the object may include the target object, and adds a label or an attribute to the box-selected object. Optionally, the object may be box-selected by using a 3D detection box used as a gold standard. Therefore, point cloud data corresponding to a part of objects in the original point cloud data set obtained by the obtaining module 101 has a label. Optionally, in another embodiment provided in the present invention, the point cloud data processing apparatus may include a data labeling module. The data labeling module is configured to generate a data labeling interface. The user can label, by using the data labeling interface, unlabeled point cloud data collected by the user.

S102: Determine a target object point cloud in the original point cloud data set.

Specifically, the user sends an instruction to the point cloud processing apparatus by using the terminal device through the communication connection, to determine the target object in the original point cloud data set. The target object may be a target object of a downstream task. For example, the target object may be a target object used for object detection, or may be used for semantic segmentation. A specific downstream task is not limited in the present invention. The original point cloud data set may include point cloud data that represents a plurality of labeled objects. The user may determine at least one target object of the plurality of objects by entering or tapping/clicking to select a keyword, an attribute label, or the like, and point cloud data corresponding to the at least one target object is target point cloud data. In a possible implementation, the point cloud processing apparatus includes a point cloud selecting module. The module selects an object bounding box based on a keyword, and maps the bounding box to a location of a sparse original point cloud. In another embodiment provided in the present invention, this step may be omitted. In this scenario, the object labeled in the original point cloud data set obtained by the point cloud data apparatus is the target object. Specifically, FIG. 4 is a diagram of another point cloud data processing interaction interface according to an embodiment of the present invention. The diagram shows a target object confirmation interface. The user may select the target object on this interface. In this diagram, the user selects a car as the target object, and point cloud data whose tag or label corresponds to the car is target point cloud data that is subsequently used.

S103: Augment the original point cloud data set.

S1031: Density a sparse point cloud in the target point cloud data set.

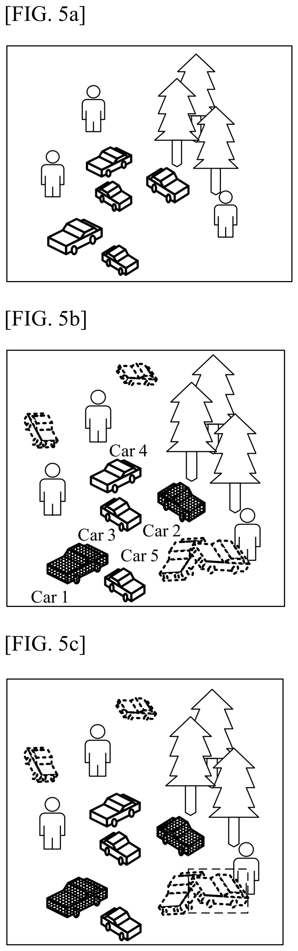

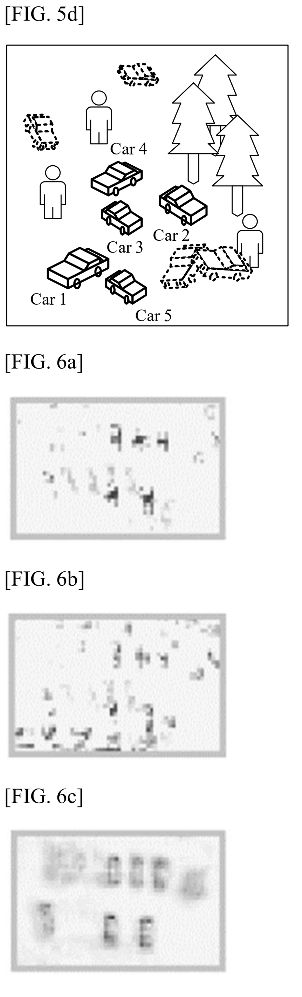

Specifically, the augmentation module 102 determines sparse point cloud data in the target point cloud data and performs densification. For example, the augmentation module 102 may determine that point cloud data whose point cloud density is less than a sparsity threshold is a sparse point cloud, and a unit of the point cloud density is, for example, a quantity of points per cubic meter. Optionally, a value of the sparsity threshold may be entered by the user, for example, an input parameter low _bound=80. The densification on the point cloud data may also be referred to as point cloud data supplement. In some embodiments provided in the present invention, the densification may be performed in the following manner: deep learning-based methods, where a deep learning model is used in these methods to predict missing point cloud data, and usually a large amount of training data is needed, but a high-quality result may be generated; interpolation-based methods, where an interpolation technology is used in these methods to estimate the missing point cloud data, and usually dense sampling of the point cloud data is needed; and geometric shape-based methods, where a geometric shape of the point cloud data is used in these methods to estimate the missing point cloud data, and usually dense sampling of the point cloud data is needed. A point cloud data densification method provided by the point cloud data processing apparatus is not limited in the present invention. For an effect diagram of point cloud data densification, refer to FIG. 5b, which is a diagram of a point cloud data augmentation effect according to an embodiment of the present invention. As shown in FIG. 5, FIG. 5a shows an original point cloud data set. The original point cloud data set includes objects such as pedestrians, cars, and trees. After the cars are determined as target objects, a car 1, a car 2, a car 3, a car 4, and a car 5 are point cloud data of the target objects. The car 1 and the car 2 are target point clouds whose point cloud density is less than the sparsity threshold. Dense processing is performed on the target point clouds: the car 1 and the car 2, to improve the point cloud density of the car 1 and the car 2, to obtain dense point cloud data of the car 1 and the car 2 in FIG. 5b.

As described above, the point cloud collected by the point cloud collection device suffers from sparseness and gaps, while a dense point cloud can make execution of a downstream point cloud processing task more efficient. Therefore, supplementing a sparse part in the target point cloud data can improve an effect of the point cloud processing task like point cloud feature extraction.

S1032: Replicate a dense point cloud in the target point cloud data.

Specifically, optionally, the augmentation module 102 replicates the dense point cloud in the point cloud data of the target object. For example, point cloud data whose point cloud density is greater than a density threshold may be determined as the dense point cloud. Optionally, a value of the density threshold may be entered by the user, for example, an input parameter up_bound=80. The augmentation module may perform random angle rotation and/or random distance translation on replicated point cloud, to generate one or more copies of the dense point cloud, and increase a quantity of dense point clouds in augmented point clouds, so as to generate an augmented point cloud data set. For an effect diagram of point cloud data replication, refer to FIG. 5b, which is a diagram of a point cloud data augmentation effect according to an embodiment of the present invention. The car 3 and the car 4 are target point clouds whose point cloud density is higher than the density threshold. The target point clouds, the car 3 and the car 4, are replicated, to increase a quantity of these high-quality point cloud data, and obtain replicated point cloud data of the car 3 and the car 4 that are represented by dashed lines in FIG. 5b.

As described above, a copy of the dense point cloud in the target point cloud is replicated, so that a quantity of high-quality target object point clouds in the point cloud data set can be increased, thereby improving an effect of a point cloud processing task.

In an embodiment provided in the present invention, the dense point cloud may be cropped by using a detection box that is in the original point cloud data set and that is used to mark the target object point cloud.

Because consistency training needs to be performed on a neural network trained by using the sparse point cloud and a neural network trained by using the dense point cloud, when the augmented point cloud data set includes replicated object point cloud data, the augmentation module 102 needs to perform a same operation on same data in the original point cloud data set. To be specific, the augmentation module 102 performs a same random movement operation on the replicated object point cloud data, and adds the replicated object point cloud data to the original point cloud data set. In another embodiment provided in the present invention, with reference to an operation on the dense point cloud in the augmented point cloud data set, the same operation may be performed on the dense point cloud data of the original point cloud data set, for example, a moving angle and a moving distance of the dense point cloud in the augmented point cloud data set are recorded, or the point cloud data may be replicated in the augmented point cloud data set, and separately added to the augmented point cloud data set and the original point cloud data set. A manner of augmenting the dense point cloud is not limited in the present invention. For a diagram of performing the same operation on the original point cloud data set, refer to FIG. 5d. In other words, the replicated point cloud data of the car 3 and the car 4 that are represented by dashed lines in FIG. 5d is obtained in the original point cloud data set.

S1033: Receive a point cloud data selecting instruction sent by the user, and delete data according to the instruction.

In a scenario of the augmentation manner of replicating the dense point cloud in S1032, an object point cloud collision phenomenon may occur. For example, point clouds that are replicated and randomly moved overlap, or these point clouds overlap original object point clouds in the point cloud data. In this case, optionally, the point cloud processing apparatus 10 generates an interaction interface. The interaction interface is configured to display an augmented result of the point cloud data. For an implementation of the interaction interface, refer to FIG. 5. FIG. 5b is a diagram of an augmented point cloud data set. In a lower right corner of the figure, two cars that are replicated and randomly moved overlap. In this case, the user may send the instruction to the point cloud processing apparatus. For example, in FIG. 5c, a car on the right side is tapped/clicked for selection and a corresponding point cloud is deleted. In this way, the point cloud data has a correct and realistic semantic expression. Optionally, in this step, the augmentation module 102 or another module in the point cloud processing apparatus 10 may automatically identify and delete point clouds that overlap or collide with each other, to ensure that semantics of the point cloud in the image is proper.

In conclusion, FIG. 5a shows the original point cloud data set. In a procedure from S102 to S103, the user selects the car as the target object, where the car 1 and the car 2 are the target point clouds whose point cloud density is less than the sparsity threshold, and the car 3 and the car 4 are the target point clouds whose point cloud density is greater than the density threshold. In S1031, densification is performed on the target point clouds: the car 1 and the car 2, to improve the point cloud density of the car 1 and the car 2, and in S1032, the target point clouds, namely, the car 3 and the car 4, are replicated and randomly moved, to increase a quantity of dense point clouds. In this case, a diagram of the augmented point cloud data set is shown in FIG. 5b. The data set includes the car 1 and the car 2 that have undergone densification, and further includes at least one car 3 and car 4 that are replicated and randomly moved. A diagram of the original point cloud data set is shown in FIG. 5d. The data set includes the at least one car 3 and car 4 that are replicated and randomly moved. In another embodiment provided in the present invention, only step S1031 may be performed, and other steps of S103 do not need to be performed. This is not limited herein.

S104: Train a first neural network model by using the augmented point cloud data set.

Specifically, a first training module 1031 trains the first neural network model by using the augmented point cloud data set. The first neural network model is a neural network model configured to execute the point cloud processing task. As described above, the point cloud processing task may be the object detection, the object classification, the object segmentation, point cloud registration, target denoising, or the like. As described above, the augmented point cloud data set includes the densified sparse point cloud data, and optionally, further includes the dense point cloud data that is replicated and randomly moved. In a training process of the first neural network, a target task is supervised to calculate a loss. The augmented point cloud data set is input into the first neural network model, to obtain an output result that is used as a predicted value, and a result error between the result and a real value is calculated and fed back to the network model for training.

Specifically, a neural network model structure used for point cloud data processing may include a backbone, a neck, and a head. The backbone is responsible for extracting a feature of an input image for subsequent processing and analysis. A main function of the neck is to perform dimension reducing on or adjusting the feature from the backbone to better adapt to a task requirement. The head generates a final output by inputting a feature processed by the neck. A structure of the head varies based on the task. For example, for an image classification task, a softmax classifier may be used; and for an object detection task, a bounding box regressor and a classifier may be used. Preferably, the neural network model in this embodiment of the present invention is a neural network model including all the foregoing structures. In another embodiment provided in the present invention, the neural network model may alternatively include a part of structures mentioned above. The structure of the neural network model is not limited in the present invention.

S105: Train a second neural network model by using the original point cloud data set and a trained first neural network model.

Specifically, in a first implementation provided in embodiments of the present invention, the second training module 1032 may train the second neural network model by using both the sparse original point cloud data set and the trained first neural network model. To be specific, when task execution performed by the second neural network is supervised to calculate a loss, consistency training performed on the second neural network model by using the trained first neural network model is supervised to calculate a loss. In other words, the two losses are jointly constrained to train the second neural network model. In this case, the training of the second neural network model involves two types of supervised losses: one is the loss of the consistency training performed on the second neural network by using the first neural network, and the other is the loss incurred when the second neural network performs the target task by using the original point cloud data set. Specifically, in a process of performing consistency training on the second neural network model by using the first neural network model, the first neural network is a teacher network, and the second neural network is a student network. A purpose of the student network is to improve performance of the student network by learning from the teacher network. Therefore, the student network needs to approximate an output of the teacher network as closely as possible during training. In this process, a loss function usually includes two parts: One part is a difference between a prediction result of the student network and a prediction result of the teacher network, and the other part is a difference between the prediction result of the student network and a real label. Weights of the two parts of the loss function may be adjusted based on a specific task. The difference between the prediction result of the student network and the prediction result of the teacher network may be calculated by using a mean square error (MSE), a cross entropy (CE), or another method, and the difference between the prediction result of the student network and the real label is usually calculated by using the cross entropy (CE). A specific implementation of the consistency training is not limited in this application.

In a second implementation provided in embodiments of the present invention, the second training module 1032 may first pre-train the second neural network model by using the sparse original point cloud data set, and then train a pre-trained second neural network model by using the first neural network model. In other words, the sparse original point cloud data set is first input into the second neural network model for pre-training. In this case, a result of target task execution by a second neural network by using the original point cloud data is used to calculate a loss, then a parameter of the trained first neural network model is fixed, and consistency training is performed on both the trained first neural network model and the pre-trained second neural network model.

In this way, a feature output by the second neural network model is close to a feature output by the first neural network, and the trained second neural network can extract a high-quality point cloud feature when using the sparse original point cloud data set as an input, and output a high-quality task execution result.

S106: Generate a visualization interface, and display processing results of the two neural networks.

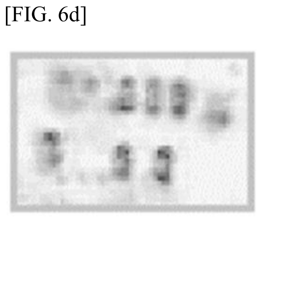

Specifically, the visualization interface including a UI is generated. The visualization interface displays the processing results of the trained first neural network and the trained second neural network. Preferably, the training results are presented in pairs, showing output results of an original point cloud data set corresponding to the two networks. Specifically, the output result in this embodiment of the present invention may be an output of the backbone or the backbone and the neck, that is, an output result of an intermediate process, for example, a feature extraction result; or may be an output of the head, for example, an object classification result, a bounding box, or a mask. Preferably, the output result of the first neural network may be an output result when training is about to end, or may be an inference result obtained by fixing a network parameter after the training ends. The output result of the second neural network may be an output result when training is stable, that is, in a loss convergence phase. In this case, the second neural network is still in a training process, and each original point cloud data set may be iteratively trained to output a training result. An output phase of the result is not limited in the present invention. For example, the visualization interface may display, in the form of a thermodynamic diagram, a point cloud data feature extraction result of a data set under each of the two networks. For another example, the visualization interface may display, in the form of a black-and-white mask, an object segmentation result of a data set under each of the two networks. The display form is not limited in the present invention. For a diagram of the visualization interface, refer to FIG. 6a to FIG. 6d. FIG. 6 is a diagram of training result comparison according to an embodiment of the present invention. FIG. 6a and FIG. 6b are output results of the second neural network model, and FIG. 6c and FIG. 6d are output results of the first neural network model. FIG. 6a and FIG. 6c correspond to a same original point cloud data set, and FIG. 6b and FIG. 6d correspond to a same original point cloud data set. If a difference between two results corresponding to a same original point cloud data set is large, a training effect of the neural network on the data set is poor, and the original point cloud data set may be considered as a hard example data set.

S107: Receive a hard example data set selecting instruction sent by the user, and determine the hard example data set.

Specifically, the user may compare output results of a same data set under the two neural networks by viewing the foregoing visualization interface, to intuitively display capabilities of processing the data by the two networks. Optionally, if the two results differ greatly, it means that the second neural network has a poor capability of processing the point cloud data set, and the point cloud data set may be a hard example data set. In this case, the hard example data processing module 104 receives a tap/click selection instruction or another instruction from the user, and determines that the data set corresponding to the processing result is the hard example data set. If the difference between the two results is small, it means that the capability of processing the point cloud data set by the second neural network is already close to a capability of processing the augmented point cloud data set by the first neural network, and the data set may not be the hard example data set. Therefore, the user may send the hard example data set selecting instruction. Specifically, the user may tap/click select one or more results that differ greatly, and a data set corresponding to the one or more results may be determined as the hard example data set.

S108: Augment the original point cloud data set corresponding to the hard example data set, and re-place the hard example data set into an augmented original point cloud data set.

Specifically, after determining that an original point cloud data set or an augmented point cloud data set corresponding to the original point cloud data set is a hard example data set, the hard example data processing module 104 adjusts the data set in a small range, and then puts an adjusted data set back into a plurality of original point cloud data sets as training data, to continue training the second neural network model. For example, in a possible implementation provided in this embodiment of the present invention, some hard example data sets are caused by a rare target point cloud form. For example, in a traffic scenario, an appearance of a car is rare, or an angle of a car is rare. As a result, the data set may become a hard example data set. Therefore, target point cloud data in the hard example data set is adjusted in a small range by the point cloud data processing apparatus, such as undergoes small-range displacement and/or rotation, and then is combined with other point cloud data in the hard example data set, another original point cloud data set, or background point cloud data in another point cloud data set, to generate an augmented hard example data set including the target point cloud. Optionally, a tap/click selection instruction of the user may be received, and it is determined that one or more pieces of target point cloud data in the hard example data set mainly cause the hard example data, and the target point cloud data is fine-tuned and augmented. In another embodiment of the present invention, another augmentation manner may be used to augment the hard example data set, and the augmentation manner of the hard example data set is not limited in the present invention.

Optionally, after the hard example data set flows back to the original point cloud data set, the augmentation module 102 may continue to perform an existing original point cloud data set augmentation method, to train different neural networks. Optionally, for the original point cloud data set and the augmented point cloud data set that correspond to the hard example data set, a same adjustment operation may be performed on a target point cloud that causes a hard example, to directly generate an original point cloud data set and an augmented point cloud data set that are used for continued training.

Preferably, when the augmented hard example data set is added to the original point cloud data set, the second neural network model is still in a training process, that is, the user can add, in the training process in real time, a hard example data set used for training, to continuously optimize a training effect.

More hard example data sets are added to the training data, so that the model can better learn data distribution to improve a generalization capability of the model. In addition, the hard example data set may further help the model better learn noise of data, thereby improving robustness of the model and improving task execution results of the second neural network model for different data.

S109: Export a trained second neural network model.

Specifically, the second neural network model may be packaged by the exporting module 105 in a file form for the user to download, and deployed on a local computing instance of the user, or may be deployed on a computing instance that is the same as or different from another module of the point cloud processing apparatus, and a corresponding inference interaction interface is provided for the user to further use the model for inference. A deployment location of the trained neural network model is not limited in the present invention.

S110: Perform inference by using the trained second neural network model.

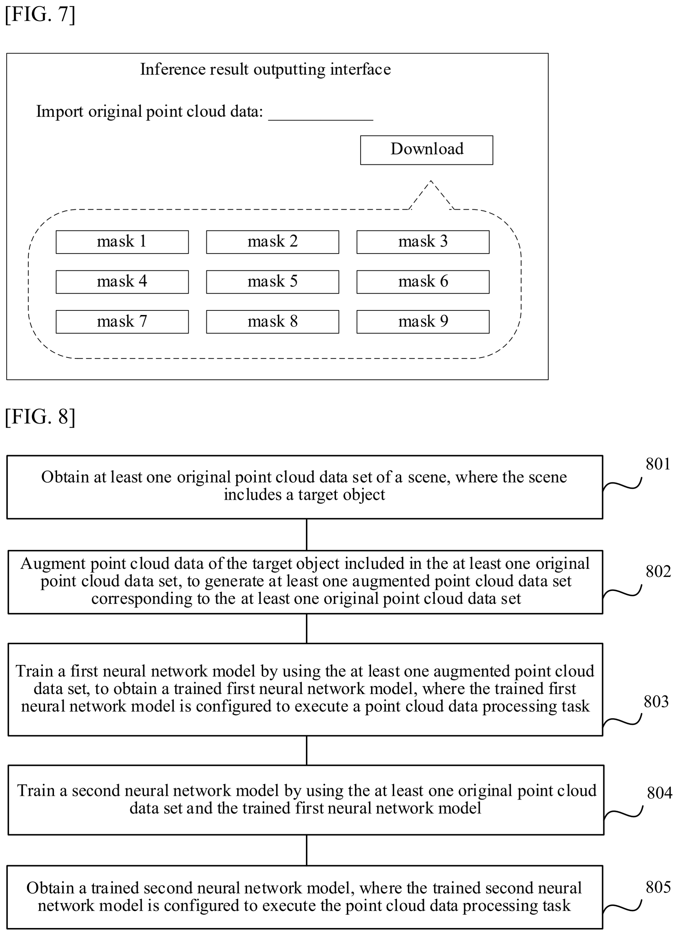

Specifically, the user uploads a point cloud data set to the trained second neural network model, and the point cloud data set is an original data set that has not undergone augmentation. The second neural network model trained by the inference module 106 obtains an execution result of the target task through inference. For an interaction interface of this step, refer to FIG. 7, which is a diagram of another point cloud data processing interaction interface according to an embodiment of the present invention. The user imports an original point cloud data set, and inputs the original point cloud data set into the trained second neural network for inference. When a point cloud data processing task is an object segmentation task, an inference result is a mask of object segmentation of each original point cloud data set, and a file of the result may be downloaded by the user.

The point cloud data processing method and the point cloud data processing apparatus that are provided in the present invention may also be applied to a 2D point cloud. This is not limited in the present invention.

In another embodiment provided in the present invention, the point cloud data processing method and apparatus provided in embodiments of the present invention may be applied to point cloud data processing or analysis tasks such as point cloud object detection, point cloud object classification, and point cloud object segmentation, and may be applied to scenarios such as self-driving, robot, virtual reality, architectural design, and medical imaging. An application scenario of embodiments is not limited in the present invention.

Therefore, according to the point cloud data processing method provided in embodiments of the present invention, in a point cloud data processing process, an augmented point cloud data of original point cloud data may be obtained through data augmentation, a neural network is trained by using the augmented point cloud data, and a finally desired neural network for executing a target task is trained by using the original point cloud data and the neural network. In this way, the neural network can obtain a high-quality processing result when sparse original point cloud data is used as an input, a fundamental problem of a poor point cloud processing task execution effect caused by sparse point clouds is resolved, and a point cloud data augmentation manner is expanded.

It should be noted that when the point cloud data processing apparatus provided in the foregoing embodiments processes the original point cloud, the division of the foregoing functional modules is merely described as an example. In actual application, the foregoing functions may be assigned as needed to be implemented by different functional modules. In other words, an internal structure of the apparatus is divided into different functional modules, to implement all or a part of the functions described above. In addition, the point cloud data processing apparatus provided in the foregoing embodiments and the embodiment of the point cloud data processing method shown in FIG. 8 belong to a same concept. For details of the specific implementation process, reference may be made to the method embodiments. Details are not described herein again.

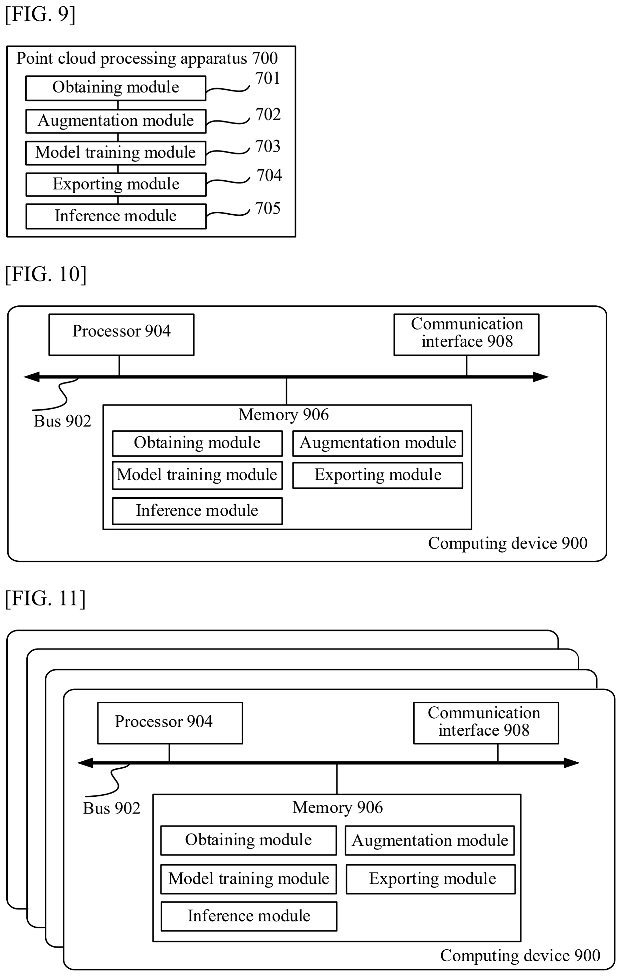

FIG. 9 is a diagram of a structure of a point cloud data processing apparatus according to an embodiment of the present invention. The point cloud data processing apparatus 700 may be implemented as a part or all of a point cloud data processing server by using software, hardware, or a combination thereof. Refer to FIG. 9. The point cloud data processing apparatus 700 includes an obtaining module 701, an augmentation module 702, a model training module 703, an exporting module 704, and an inference module 705.

The obtaining module 701 is configured to obtain at least one original point cloud data set of a scene, where the scene includes a target object.

The augmentation module 702 is configured to augment point cloud data of the target object included in the at least one original point cloud data set, to generate at least one augmented point cloud data set corresponding to the at least one original point cloud data set.

The model training module 703 is configured to train a first neural network model by using the at least one augmented point cloud data set, to obtain a trained first neural network model, where the trained first neural network model is configured to execute a point cloud data processing task.

The exporting module 704 is configured to train a second neural network model by using the at least one original point cloud data set and the trained first neural network model.

The inference module 705 is configured to obtain a trained second neural network model, where the trained second neural network model is configured to execute the point cloud data processing task.

The obtaining module 701, the augmentation module 702, the model training module 703, the exporting module 704, and the inference module 705 may all be implemented by using software, or may be implemented by using hardware. For example, the following uses the obtaining module 701 as an example to describe an implementation of the obtaining module 701. Similarly, for implementations of the augmentation module 702, the model training module 703, the exporting module 704, and the inference module 705, refer to the implementation of the obtaining module 701.

A module is used as an example of a software functional unit, and the obtaining module may include code run on a computing instance. The computing instance may include at least one of a physical host (a computing device), a virtual machine, and a container. Further, there may be one or more computing instances. For example, the obtaining module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the obtaining module may include at least one computing device, for example, a server. Alternatively, a module A may be a device or the like that is implemented by using an application-specific integrated circuit (application-specific integrated circuit, ASIC) or a programmable logic device (programmable logic device, PLD). The PLD may be implemented by using a complex programmable logical device (complex programmable logical device, CPLD), a field-programmable gate array (field-programmable gate array, FPGA), generic array logic (generic array logic, GAL), or any combination thereof.

A plurality of computing devices included in the obtaining module 701 may be distributed in a same region, or may be distributed in different regions. The plurality of computing devices included in the obtaining module may be distributed in a same AZ, or may be distributed in different AZs. Similarly, the plurality of computing devices included in the obtaining module may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the obtaining module 701 may be configured to perform any step in the point cloud data processing method, and the augmentation module 702, the model training module 703, the exporting module 704, and the inference module 705 may be configured to perform any step in the point cloud data processing method. Steps that the obtaining module 701, the augmentation module 702, the model training module 703, the exporting module 704, and the inference module 705 are responsible for implementing may be specified as required. Different steps in the point cloud data processing method are respectively implemented by using the obtaining module 701, the augmentation module 702, the model training module 703, the exporting module 704, and the inference module 705, to implement all functions of the point cloud data processing apparatus.

In embodiments of the present invention, in a point cloud data processing process, an augmented point cloud data of original point cloud data may be obtained through data augmentation, a neural network is trained by using the augmented point cloud data, and a finally desired neural network for executing a target task is trained by using the original point cloud data and the neural network. In this way, the neural network can obtain a high-quality processing result when sparse original point cloud data is used as an input, a fundamental problem of a poor point cloud processing task execution effect caused by sparse point clouds is resolved, and a point cloud data augmentation manner is expanded. It should be noted that when the point cloud data processing apparatus provided in the foregoing embodiments processes the point cloud data, the division of the foregoing functional modules is merely described as an example. In actual application, the foregoing functions may be assigned as needed to be implemented by different functional modules. In other words, an internal structure of the apparatus is divided into different functional modules, to implement all or a part of the functions described above. In addition, the point cloud data processing apparatus provided in the foregoing embodiments and the embodiment of the point cloud data processing method belong to a same concept. For details of the specific implementation process, reference may be made to the method embodiments. Details are not described herein again.

FIG. 10 is a diagram of a structure of a computing device according to an embodiment of the present invention. The computing device 900 includes a bus 902, a processor 904, a memory 906, and a communication interface 908. The processor 904, the memory 906, and the communication interface 908 communicate with each other through the bus 902. A quantity of processors and a quantity of memories in the computing device 900 are not limited in embodiments of the present invention.

When the technical solution provided in embodiments of the present invention is implemented, the computing device 900 may be a server that executes a point cloud data processing task.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, the bus is represented by using only one line in FIG. 10. However, it does not mean that there is only one bus or only one type of bus. The bus 902 may include a path for transferring information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a micro processor (micro processor, MP), and a digital signal processor (digital signal processor, DSP).

The memory 906 may include a volatile memory (volatile memory), for example, a random-access memory (random-access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

In embodiments of the present invention, the memory 906 stores executable program code, and the processor 904 executes the executable program code to separately implement functions of the obtaining module 701, the augmentation module 702, the model training module 703, the exporting module 704, and the inference module 705, so as to implement the point cloud data processing method shown in FIG. 2. In other words, the memory 906 stores instructions used to perform the point cloud data processing method shown in FIG. 2.

The communication interface 908 uses a transceiver module, for example but not limited to, a network interface card or a transceiver, to implement communication between the computing device 900 and another device or a communication network.

An embodiment of the present invention further provides a computing device cluster. The computing device cluster includes at least one computing device. The computing device may be a server, like a central server, an edge server, or a local server in a local data center. In some embodiments, the computing device may alternatively be a terminal device, like a desktop computer, a notebook computer, or a smartphone.

As shown in FIG. 11, the computing device cluster includes at least one computing device 900. The memories 906 in one or more computing devices 900 in the computing device cluster may store same instructions used to perform the point cloud data processing method shown in FIG. 3.

In some possible implementations, the memories 906 in the one or more computing devices 900 in the computing device cluster may separately store some instructions used to perform the point cloud data processing method. In other words, a combination of the one or more computing devices 900 may jointly execute instructions used to perform the point cloud data processing method shown in FIG. 2.

It should be noted that the memories 906 in different computing devices 900 in the computing device cluster may store different instructions that are respectively used to perform some functions of the point cloud data processing apparatus. In other words, instructions stored in the memories 906 in different computing devices 900 may be used to implement functions of one or more of the obtaining module 701, the augmentation module 702, the model training module 703, the exporting module 704, and the inference module 705.

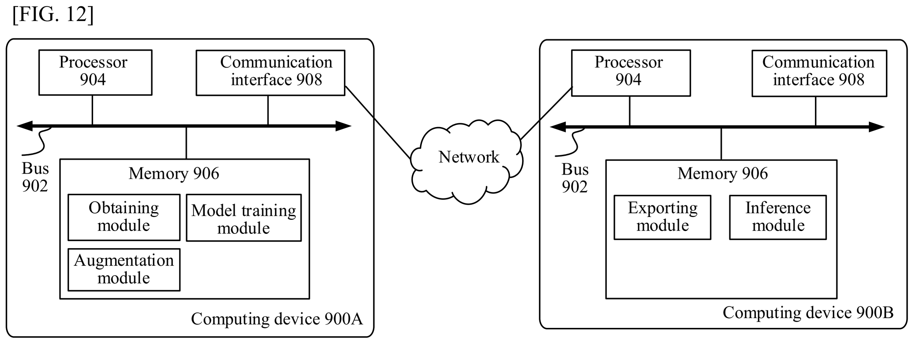

In some possible implementations, one or more computing devices in the computing device cluster may be connected through a network. The network may be a wide area network, a local area network, or the like. FIG. 12 shows a possible implementation. As shown in FIG. 12, two computing devices 900A and 900B are connected through a network. Specifically, each computing device is connected to the network through a communication interface in the computing device.

An example in which the computing device cluster implements the point cloud data processing method shown in FIG. 12 is used. In the implementation shown in FIG. 12, the memory 906 in the computing device 900A stores instructions for executing functions of the obtaining module 701, the augmentation module 702, and the model training module 703. In addition, the memory 906 in the computing device 900B stores instructions for executing functions of the exporting module 704 and the inference module 705.

Considering that in the point cloud data processing method provided in the present invention, a large amount of original data may be needed for data processing and neural network training, a connection manner between computing device clusters is shown in FIG. 12. In this case, it is considered that a plurality of functions are implemented in different computing devices, and functions implemented by the instruction receiving module 704, the estimation module 706, and the resource status obtaining module 705 are performed by the computing device 900B, to reduce a calculation amount of the computing device 900A.

It should be understood that functions of the computing device 900A shown in FIG. 12 may alternatively be completed by a plurality of computing devices 900. Similarly, functions of the computing device 900B may alternatively be completed by a plurality of computing devices 900.

An embodiment of the present invention further provides another computing device cluster. For a connection relationship between computing devices in the computing device cluster, refer to the connection manners in the computing device cluster in FIG. 11 and FIG. 12 similarly. A difference lies in that the memories 906 in one or more computing devices 900 in the computing device cluster may store same instructions used to perform the point cloud data processing method.

In some possible implementations, the memories 906 in the one or more computing devices 900 in the computing device cluster may separately store some instructions used to perform the point cloud data processing method. In other words, a combination of the one or more computing devices 900 may jointly execute instructions used to perform the point cloud data processing method.

An embodiment of the present invention further provides a computer program product including instructions. The computer program product may be software or a program product that includes the instructions and that can run on a computing device or be stored in any usable medium. When the computer program product runs on at least one computing device, the at least one computing device is caused to perform the point cloud data processing method shown in FIG. 3.

An embodiment of the present invention further provides a computer-readable storage medium. The computer-readable storage medium may be any usable medium that can be stored in a computing device, or a data storage device, like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions indicate the computing device to perform the point cloud data processing method shown in FIG. 3.

It should be understood that "a plurality of" mentioned in this specification means two or more. In descriptions of embodiments of the present invention, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of the present invention, terms such as "first" and "second" in embodiments of the present invention are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference.

It should be noted that information (including but not limited to user equipment information, user personal information, and the like), data (including but not limited to data used for analysis, stored data, displayed data, and the like), and signals involved in embodiments of the present invention are all authorized by the users or fully authorized by all parties, and collection, use, and processing of related data need to comply with relevant laws, regulations, and standards of relevant countries and regions.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof, and such modifications or replacements do not cause the essence of the corresponding technical solutions to depart from the protection scope of technical solutions of embodiments of the present invention.

## Claims

1. A point cloud data processing method, wherein the method comprises:
obtaining at least one original point cloud data set of a scene, wherein the scene comprises a target object;
augmenting point cloud data of the target object comprised in the at least one original point cloud data set, to generate at least one augmented point cloud data set corresponding to the at least one original point cloud data set;
training a first neural network model by using the at least one augmented point cloud data set, to obtain a trained first neural network model, wherein the trained first neural network model is configured to execute a point cloud data processing task;
training a second neural network model by using the at least one original point cloud data set and the trained first neural network model; and
obtaining a trained second neural network model, wherein the trained second neural network model is configured to execute the point cloud data processing task.

2. The method according to claim 1, wherein training the second neural network model by using the at least one original point cloud data set and the trained first neural network model comprises:
pre-training the second neural network model by using the at least one original point cloud data set, to obtain a pre-trained second neural network model, and training the pre-trained second neural network model by using the trained first neural network model; or
training the second neural network model by using both the at least one original point cloud data set and the trained first neural network model.

3. The method according to claim 1 or 2, wherein the augmenting the point cloud data of the target object comprised in the at least one original point cloud data set comprises:
determining, for densification from the point cloud data of the target object comprised in the at least one original point cloud data set, first point cloud data whose density is less than a sparsity threshold, wherein the at least one augmented point cloud data set comprises densified first point cloud data.

4. The method according to any one of claims 1 to 3, wherein the augmenting the point cloud data of the target object comprised in the at least one original point cloud data set comprises:
determining, for replication from the point cloud data of the target object comprised in the at least one original point cloud data set, second point cloud data whose density is higher than a density threshold, wherein the at least one augmented point cloud data set comprises replicated second point cloud data.

5. The method according to claim 4, wherein before training the second neural network model by using the at least one original point cloud data set and the trained first neural network model, the method further comprises:
replicating the second target point cloud data comprised in an original point cloud data set; and
adding replicated second target point cloud data of the second target point cloud data comprised in the original point cloud data set to the original point cloud data set.

6. The method according to any one of claims 1 to 5, wherein
the training the first neural network model by using the at least one augmented point cloud data set, to obtain the trained first neural network model comprises:
training the first neural network model by using an augmented point cloud data set corresponding to an original point cloud data set, to obtain the trained first neural network model, and obtain a first task processing result of the original point cloud data set;
the training the second neural network model by using the at least one original point cloud data set and the trained first neural network model comprises:
training the second neural network model by using the original point cloud data set and the trained first neural network model, to obtain a second task processing result of the original point cloud data set; and
the method further comprises:
generating a visualization interface, wherein the visualization interface is configured to display the first task processing result and the second task processing result of the original point cloud data set in pairs in the form of images or data; and
receiving a hard example data set confirmation instruction, wherein the hard example data set confirmation instruction indicates that the original point cloud data set corresponding to the first task processing result or the second task processing result is a hard example data set.

7. The method according to claim 6, wherein the method further comprises:
augmenting the hard example data set, to generate at least one augmented hard example data set; and
adding the at least one augmented hard example data set to the at least one original point cloud data set.

8. The method according to claim 7, wherein the scene further comprises a background object, and the augmenting the hard example data set, to generate the at least one augmented hard example data set comprises:
extracting point cloud data of a target object from the hard example data set; and
combining the point cloud data of the target object in the hard example data set and point cloud data of the background object in the at least one original point cloud data set, to generate the at least one augmented hard example data set.

9. A point cloud data processing apparatus, wherein the apparatus comprises:
an obtaining module, configured to obtain at least one original point cloud data set of a scene, wherein the scene comprises a target object;
an augmentation module, configured to augment point cloud data of the target object comprised in the at least one original point cloud data set, to generate at least one augmented point cloud data set corresponding to the at least one original point cloud data set;
a first training module, configured to train a first neural network model by using the at least one augmented point cloud data set, to obtain a trained first neural network model, wherein the trained first neural network model is configured to execute a point cloud data processing task;
a second training module, configured to train a second neural network model by using the at least one original point cloud data set and the trained first neural network model; and
an exporting module, configured to obtain a trained second neural network model, wherein the trained second neural network model is configured to execute the point cloud data processing task.

10. The apparatus according to claim 9, wherein the second training module is configured to:
pre-train the second neural network model by using the at least one original point cloud data set, to obtain a pre-trained second neural network model, and train the pre-trained second neural network model by using the trained first neural network model; or
train the second neural network model by using both the at least one original point cloud data set and the trained first neural network model.

11. The apparatus according to claim 9 or 10, wherein the augmentation module is configured to:
determine, for densification from the point cloud data of the target object comprised in the at least one original point cloud data set, first point cloud data whose density is less than a sparsity threshold, wherein the at least one augmented point cloud data set comprises densified first point cloud data.

12. The apparatus according to any one of claims 9 to 11, wherein the augmentation module is configured to:
determine, for replication from the point cloud data of the target object comprised in the at least one original point cloud data set, second point cloud data whose density is higher than a density threshold, wherein the at least one augmented point cloud data set comprises replicated second point cloud data.

13. The apparatus according to claim 12, wherein the augmentation module is configured to:
replicate the second target point cloud data comprised in an original point cloud data set; and
add replicated second target point cloud data of the second target point cloud data comprised in the original point cloud data set to the original point cloud data set.

14. The apparatus according to any one of claims 9 to 13, wherein
the first training module is configured to:
train the first neural network model by using an augmented point cloud data set corresponding to an original point cloud data set, to obtain the trained first neural network model, and obtain a first task processing result of the original point cloud data set;
the second training module is configured to:
train the second neural network model by using the original point cloud data set and the trained first neural network model, to obtain a second task processing result of the original point cloud data set; and
the apparatus further comprises:
an interface generating module, configured to generate a visualization interface, wherein the visualization interface is configured to display the first task processing result and the second task processing result of the original point cloud data set in pairs in the form of images or data; and
a hard example data processing module, configured to receive a hard example data set confirmation instruction, wherein the hard example data set confirmation instruction indicates that the original point cloud data set corresponding to the first task processing result or the second task processing result is a hard example data set.

15. The apparatus according to claim 14, wherein the hard example data processing module further comprises:
a hard example data augmentation module, configured to augment the hard example data set, to generate at least one augmented hard example data set; and
a hard example data adding module, configured to add the at least one augmented hard example data set to the at least one original point cloud data set.

16. The apparatus according to claim 15, wherein the scene further comprises a background object, and the hard example data augmentation module is configured to:
extract point cloud data of a target object from the hard example data set; and
combine the point cloud data of the target object in the hard example data set and point cloud data of the background object in the at least one original point cloud data set, to generate the at least one augmented hard example data set.

17. A computing device cluster, comprising at least one computing device, wherein each computing device comprises a processor and a memory; and
the processor of the at least one computing device is configured to execute instructions stored in the memory of the at least one computing device, to cause the computing device cluster to perform the point cloud data processing method according to any one of claims 1 to 8.

18. A computer program product comprising instructions, wherein when the instructions are run by a computing device cluster, the computing device cluster is caused to perform the point cloud data processing method according to any one of claims 1 to 8.

19. A computer-readable storage medium, comprising computer program instructions, wherein when the computer program instructions are executed by a computing device cluster, the computing device cluster performs the point cloud data processing method according to any one of claims 1 to 8.
